(19) Europäisches Patentamt
European Patent Office
Office européen des brevets

(11) EP 1 927 466 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**15.05.2024 Patentblatt 2024/20**

(45) Hinweis auf die Patenterteilung:
**06.01.2016 Patentblatt 2016/01**

(21) Anmeldenummer: **07118431.1**

(22) Anmeldetag: **15.10.2007**

(51) Internationale Patentklassifikation (IPC):
***C09J 175/04*** *(2006.01)* ***B32B 27/40*** *(2006.01)*
***C08G 18/24*** *(2006.01)*

(52) Gemeinsame Patentklassifikation (CPC):
**B32B 27/40; C08G 18/242; C09J 175/04**

(54) **Verbundgebilde mit einer Polyurethanschicht, Verfahren zu deren Herstellung und Verwendung**
Composite structure with a polyurethane coating, method for its manufacture and application
Formation composite dotée d'une couche de polyuréthane, son procédé de fabrication et d'utilisation

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **30.11.2006 DE 102006056956**

(43) Veröffentlichungstag der Anmeldung:
**04.06.2008 Patentblatt 2008/23**

(73) Patentinhaber: **Benecke-Kaliko AG**
**30419 Hannover (DE)**

(72) Erfinder:
- **Gerken, Andreas**
**30161, Hannover (DE)**
- **Mach, Michael**
**30853, Langenhagen (DE)**
- **Zürbig, Claus**
**30171, Hannover (DE)**
- **Jahncke, Manfred**
**31515, Wunstorf (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:

| | |
|---|---|
| **EP-A- 1 059 379** | **EP-A1- 0 426 883** |
| **EP-A1- 1 493 554** | **EP-A1- 1 582 542** |
| **EP-A2- 0 316 738** | **EP-A2- 0 814 102** |
| **EP-A2- 1 491 563** | **EP-B1- 0 670 865** |
| **WO-A-97/43326** | **WO-A-2005/042610** |
| **WO-A-2006/047432** | **WO-A1-01/90229** |
| **WO-A1-91/19750** | **WO-A1-98/38340** |
| **WO-A1-2004/092240** | **WO-A2-01/23451** |
| **DD-A1- 235 470** | **DE-A1- 2 330 175** |
| **DE-A1- 2 632 618** | **DE-A1- 2 931 125** |
| **DE-A1- 3 004 327** | **DE-A1- 3 417 265** |
| **DE-A1- 3 437 918** | **DE-A1- 3 702 615** |
| **DE-A1-102004 059 773** | **DE-A1-102005 008 182** |
| **DE-B2- 2 740 783** | **DE-C- 728 981** |
| **GB-A- 1 144 176** | **US-A- 3 023 126** |
| **US-A- 3 539 424** | **US-A- 4 102 719** |
| **US-A- 4 987 244** | **US-A- 5 698 656** |
| **US-A1- 2001 031 363** | **US-A1- 2006 249 244** |

- **Elvers el al. (Hrsg.), Ullmann's Encyclopedia of Industrial Chemistry (5th edition), vol. A 15, Seiten 283 - 292**
- **M Szycher, Szycher's Handbook of Polyuretha¬ nes, Seiten 3-1 - 3-40**
- **International Union of Pure and Applied Chemistry, Graphic Representations (Chemical Formulae) of Macromolecules - IUPAC Re¬ commendations 1994, Pure & Appl. Chem. 66(12), Seiten 2469-2482**
- **International Union of Pure and Applied Chemistry, Basic Definitions Relating to Polymers 1974, Seiten 479-491**
- **M. Szycher, Szycher's Handbook of Polyurethanes, Seiten4-19; 5-3-5-6**
- **C. Zurbig, H.-H. Kruse, "Leather Imitates" in "Ullmann's Encyclopedia of Industrial Chemistry". Band 21, Seiten 1-13**
- **H. Traubel et al., "Polyurethane fur Textil, Pa¬ pier und Leder". in G. Oertel (Hrsg.), "Kunst- stoff-Handbuch 7- Polyurethane", Seiten 621 -627**
- **J. Hoffmann et al., "Ermittlung von Zusammen setzung und Eigenschaften der Polyurethane", m G. Oertel (Hrsg.), "Kunststoff-Handbuch 7 - Polyurethane", Seilen 517 - 523, 593, 594**

EP 1 927 466 B2



**(Forts. nächste Seite)**

- **K. -F. Elgert, "Plastics, Analysis" in "Ullmann's Encyclopedia of Industrial Chemistry", Band A 20, Seiten 509, 516 - 520, 537, 540 - 542**
- **T.P. Wampler et al., "Recent Changes in Auto motive Paint Formulation using Pyrolysis-Gas Chromatography / Mass Spectrometry tor Idenfication", J. Anal Appl. Pyrolysis 40-41, Seiten 79 - 89**
- **A. Kriete et al., "Microscopy"in "Ultmann's Encyclopedia of Industrial Chemistry", Band B 6, Seiten 213, 214, 263-278**


Bemerkungen:

Die Akte enthält technische Angaben, die nach dem Eingang der Anmeldung eingereicht wurden und die nicht in dieser Patentschrift enthalten sind.

## Beschreibung

Die Erfindung betrifft ein Verbundgebilde mit einer oder mehreren Polyurethanschichten, einer Trägerschicht, insbesondere einer textilen Trägerschicht oder einer Trägerschicht aus PVC, Polyolefin oder Polyurethanschaum, einer genarbten Trägerschicht sowie einer gegebenenfalls zwischen diesen Schichten angeordneten Klebstoffschicht, ein Verfahren zur Herstellung dieses Verbundgebildes sowie vorteilhafte Verwendungen.

Unter Verbundgebilden versteht man Gebilde aus Verbundwerkstoffen, die durch Kombination unterschiedlicher Materialien erhalten werden und deren chemische, physikalische und sonstige Eigenschaften die der Einzelkomponenten übertreffen. Zu den Verbundwerkstoffen werden neben den Textilverbundstoffen, den Vliesstoffen, den Schichtpressstoffen, d.h. ineinander durch Kleben oder Kaschieren verbundene Werkstoffe in Sandwichanordnung (z.B. Sperrholz, Verbundfolien und Laminate), auch Kunstleder gezählt. Unter Kunstleder wird ein mehrschichtiges flexibles Verbundgebilde verstanden, das ein Polymer in der Oberflächenschicht und ein Trägermaterial, insbesondere aus Textil, Vlies oder einem geschäumten Material, z.B. aus PVC, Polyolefin oder Polyurethan, umfasst. Die polymere Deckschicht ist für die Abrieb- und Stofffestigkeit verantwortlich und bestimmt das Aussehen, während der Träger die gewünschte Festigkeit und Dehnbarkeit erbringt. Als Beschichtungspolymere werden u.a. Polyurethane eingesetzt. Grundsätzlich wird zwischen ein- und zweikomponentigen Beschichtungssystemen unterschieden.

Die DE-A-22 08 995, die DE-A-23 30 175 und die GB-A-1 144 176 beschreiben ein Verbundgebilde mit einer oder mehreren Polyurethanschichten und einer Trägerschicht. Die US-A-4 102 719 offenbart einen mit Polyurethan beschichteten Träger, wobei das Polyurethan aus einem Polyethertriol und einem Polyetherdiol hergestellt und nachvernetzt wird.

Die einkomponentigen Beschichtungsmassen werden als Lösung (Festkörpergehalt etwa 20 bis 30%) in organischen Lösungsmitteln (z.B. DMF, 2-Propanol, Toluol) oder als Dispersion (Festkörpergehalt etwa 20 bis 40%) verarbeitet. Nach dem Ausstreichen, z.B. auf ein Band, wie es in der DE-A-44 22 871 beschrieben ist, erfolgt die Filmbildung durch Verdampfen des Lösungsmittels im Trockenkanal. Durch Zugabe langsam reagierender polyfunktioneller Vernetzer (z.B. aliphatischer Polyisocyanate) können einkomponentige Polyurethane nachvernetzt werden, um die Eigenschaften, wie z.B. die Chemikalienbeständigkeit, zu verbessern. Aufgrund des niedrigen Festkörpergehaltes eignen sich einkomponentige Polyurethanbeschichtungssysteme zum Aufbringen dünner Filme.

Bei den zweikomponentigen Beschichtungssystemen handelt es sich um reaktive Mischungen, z.B. aus funktionalisierten Präpolymeren und Vernetzern mit geringen Anteilen an organischen Lösungsmitteln (< 5 bis 10%). Im Gegensatz zu den einkomponentigen Systemen polymerisieren diese "High-Solid-Systeme" unter den Verarbeitungsbedingungen und bilden so den Urethanfilm. Um eine ausreichende Topfzeit (Zeitspanne, in der ein Ansatz nach dem Mischen aller Bestandteile verarbeitbar bleibt) bei Raumtemperatur zu gewährleisten, werden Isocyanatkomponenten eingesetzt, deren endständige Isocyanatgruppen durch Blockierungsmittel (z.B. 2-Butanonoxim) reversibel geschützt sind. Die chemische Reaktion läuft dann in zwei Schritten ab. Zunächst wird bei Temperaturen oberhalb 140°C das Blockierungsagens abgespalten und die freie NCO-Gruppe zurückgebildet. In einem zweiten Schritt reagiert die Isocyanatendgruppe mit dem Kettenverlängerer unter Erhöhung des Molekulargewichts. Auf diese Art baut sich das Molekulargewicht des Polymers bis zum Polyurethanfilm sukzessiv auf. Nachteilig ist dabei die relativ geringe Auswahl an blockierten Isocyanatderivaten, die für dieses System zur Verfügung steht. Dies führt zu einer geringen Variabilität bei der Auswahl der Edukte und folglich zu starken Einschränkungen bei der Möglichkeit, die Zusammensetzung des Produktes zur Anpassung an gewünschte Eigenschaften zu verändern. Ein weiterer Nachteil des Systems liegt darin, dass ein hoher Reaktionsumsatz nur bei langer Verweilzeit unter hohen Temperaturen erreicht werden kann. Dies begrenzt die Produktionsgeschwindigkeit und führt zusammen mit dem hohen Preis der blockierten Isocyanatderivate zu hohen Produktionskosten.

Die Nachteile, die dem vorstehend beschriebenen Stand der Technik innewohnen, werden weitgehend durch die Lehre aus der EP 1 059 379 B1 (eigenes europäisches Patent der Anmelderin) behoben. Bei der Herstellung des daraus bekannten Verbundgebildes wird ein Polyurethan durch Umsetzung von Diisocyanaten und/oder einem Diisocyanat-Prämpolymer mit bifunktionellen und trifunktionellen Polyolen erhalten. Der Einsatz eines trifunktionellen Polyols ist dort erforderlich, wobei zur Bildung des Polyurethans das bifunktionelle und das trifunktionelle Polyol in einem Verhältnis von 1:2 bis 5:1 stehen muss. Der zwingende Einsatz trifunktioneller Polyole kann in einzelnen Fällen dazu führen, dass das Verbundgebilde nicht die gewünschte Flexibilität hat und zudem eine unerwünschte Sprödigkeit aufweist.

Der Erfindung lag daher die Aufgabe zugrunde, ein Verbundgebilde der eingangs beschriebenen Art mit verbesserten Eigenschaften und ein zu dessen Herstellung besonders vorteilhaftes Verfahren vorzuschlagen. Das angestrebte Verbundgebilde soll wünschenswerte Flexibilität und keine nachteilige Sprödigkeit zeigen. Ferner soll es abrieb-, licht- und alterungsbeständig sein und nachteilige Emissionen von Lösungsmitteln oder anderen gesundheitsschädlichen Stoffen vermeiden. Es soll in einem Arbeitsschritt eine Polyurethanschicht möglichst einer Stärke von mehr als 0,2 mm ausgebildet werden können. Eine hierzu herangezogene Streichmasse soll nach dem Streich- oder Rakelverfahren verarbeitbar sein, eine wünschenswert hohe "offene Zeit" (Topfzeit) aufweisen und zudem keinen unerwünscht hohen Viskositätsanstieg zeigen. Die Streichmasse soll bei höheren Temperaturen von z.B. mehr als etwa 100°C ausreichend

schnell aushärten, um eine hohe Produktionsgeschwindigkeit zu gewährleisten, die deutlich höher als bei der Herstellung marktverfügbarer entsprechender Verbundgebilde liegt. Ferner soll die Auswahl der Reaktionspartner flexibler sein, um dadurch die Eigenschaften des Verbundgebildes gezielt steuern zu können.

Erfindungsgemäß wird diese Aufgabe dadurch gelöst, dass die genarbte Deckschicht ein Polyurethan der Formel (I)

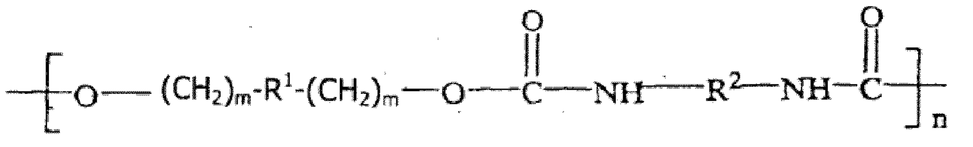

(I)

enthält, worin bedeuten: $-O-(CH_2)_m-R^1-(CH_2)_m-O-$ den Rest eines bifunktionellen Polyols mit endständiger primärer Hydroxyfunktionalität, $R^1$ und $R^2$, unabhängig voneinander, einen organischen aliphatischen, cycloaliphatischen und/oder heterocyclischen Rest, n eine ganze Zahl von 1 bis 50.000 und m eine ganze Zahl von mindestens 2.

Bei der Auswahl der Reste $R^1$ und $R^2$ unterliegt die Erfindung keiner kritischen Beschränkung. So kann es sich bei den organischen aliphatischen Resten insbesondere um verzweigte oder unverzweigte, insbesondere kurzkettige aliphatische Reste handeln, die eine Kohlenstoffzahl von 1 bis 10, insbesondere von 1 bis 6 aufweisen. So kann es sich dabei um einen Methyl-, Ethyl-, Propyl-, Butyl-, Pentyl- und/oder Hexyl-Rest handeln. Der cycloaliphatische Rest kann beispielsweise auf einen Cyclopropyl-, Cyclobutyl-, Cyclopentyl-, Dicyclohexylmethan-, Cyclohexyl- und/oder Isophoron-Rest zurückgehen. Zu den heterocyclischen Resten zählt insbesondere der Furfuryl-Rest.

Im Sinne der Erfindung werden reaktive Polyole, insbesondere aliphatische Polyole, eingesetzt, die bifunktionell sind und insbesondere an den funktionalisierten Enden reaktiv sind. Die Reaktivitätssteigerung wird durch eine partielle oder vollständige Epoxidierung von primären Hydroxyl-Endgruppen erreicht. Als Polyole kommen vorzugsweise solche eines Molekulargewichtes von 20 bis 12000, insbesondere von 250 bis 2000 in Frage. Hierbei kann es sich insbesondere handeln um Polyesterpolyole, Polyetherpolyole, Polythioetherpolyole, Polycarbonatpolyole und hydroxylgruppenhaltige aliphatische Polyacetale und hydroxylgruppenhaltige aliphatische Polycarbonate. Mischungen aus mindestens zwei Polyolen aus diesen Beispielgruppen sind auch möglich.

Zudem können zur Modifizierung der Eigenschaften des ausreagierten Systems im Ansatz auch andere Verbindungen eingesetzt werden, die mit Isocyanaten durch reaktive Wasserstoffatome reagieren können, indem ein Teil der Polyole substituiert wird. Solche Verbindungen enthalten zwei oder mehr reaktive Gruppen, die als OH-Gruppen, SH-Gruppen, NH-Gruppen, $NH_2$-Gruppen oder CH-acide Gruppen, beispielsweise in $\beta$ -Diketoverbindungen, vorliegen. Der Anteil an Polyolen mit sekundärer Hydroxyfunktionalität sollte möglichst ausgeschlossen bzw. geringfügig angesetzt sein. Vorzugsweise sollten die primären und sekundären Hydroxyfunktionalitäten des Polyols in einem Verhältnis von mehr als 10:1, insbesondere von mehr als 50:1 stehen.

Für den mit der Erfindung angestrebten Erfolg ist es wesentlich, dass bei der Herstellung der genarbten Polyurethan-Deckschicht ein trifunktionelles Polyol in störenden Mengen weitgehend ausgeschlossen wird, insbesondere im wesentlichen nicht herangezogen wird. In Einzelfällen ist es nicht nachteilig, wenn geringe Mengen an trifunktionellem Polyol vorliegen.

Bei der vorstehend bezeichneten Formel (I) beträgt m mindestens 2. Bevorzugt ist eine ganze Zahl von 2 bis 6, insbesondere von 4 bis 6. Die Zahl n für die Formel (I) liegt in dem weit gefassten Rahmen von 1 bis 50.000. Bevorzugt ist die Zahl von 10 bis 20.000, insbesondere 25 bis 5.000.

Als aliphatische Polyisocyanate werden bevorzugt Polyisocyanate mit einem Funktionalisierungsgrad von 2 eingesetzt, die zudem einen Gehalt von Isocyanatgruppen zwischen etwa 4 und 20 %, insbesondere aber zwischen 5 und 13 % besitzen. Der definierte Funktionalisierungsgrad bedingt, dass Isocyanat-Präpolymere eingesetzt werden, d.h. vorpolymerisierte Verbindungen aus monomeren aliphatischen Isocyanaten und einem Kettenverlängerer, wie beispielsweise einem difunktionellen Polyol. Als monomere Diisocyanate zum Aufbau der Präpolymere kommen vor allem 1,6-Hexandiisocyanat (HDI), Isophorondiisocyanat (IPDI) oder Dicyclohexylmethan-4,4'-diisocyanat ($H_{12}MDI$) in Frage. Aber auch Präpolymere beispielsweise auf Basis von 1,4-Cyclohexandiisocyanat oder Bis(isocyanatomethyl)cyclohexan sind geeignet.

Im Rahmen der Erfindung wird demzufolge, wie bereits dargestellt, die Deckschicht in Form einer Polyurethan-Deckschicht ausgebildet. Hierbei wird insbesondere aus einem flüssigen reaktiven unblockierten aliphatischen Diisocyanat und einem flüssigen reaktiven unblockierten bifunktionellen Polyol in Gegenwart eines Metallkatalysators der nachfolgend noch beschriebenen Art die gewünschte Polyurethan-Deckschicht ausgebildet. Bei dem Mengenverhältnis von Diisocyanat zu bifunktionellem Polyol unterliegt die Erfindung keinen wesentlichen Beschränkungen. Als Richtlinie ließe sich angeben, dass das Mol-Verhältnis zwischen Diisocyanat und bifunktionellem Polyol etwa 1,5:1 bis 1:1,5 beträgt, dies in Gegenwart des noch detailliert beschriebenen Katalysators, wobei bei Raumtemperatur die Topfzeit der Streichmasse insbesondere mehr als 30 min und ganz besonders bevorzugt mehr als 120 min betragen sollte. Hierbei bildet

sich eine flexible Polyurethan-Deckschicht aus dieser Mischung insbesondere bei etwa 150°C in weniger als 2 min aus. Der gebildete Film besitzt gute Haftung insbesondere zu benachbarten Polyurethan- oder Lackschichten.

Aus den obigen Schilderungen zu dem Kern der Erfindung ergibt es sich, dass aromatische Bestandteile möglichst ausgeschlossen werden sollen. Dies bedeutet, dass auch Polyurethane mit aromatischem Anteil möglichst weitgehend zu vermeiden sind. Die Menge an aromatischem Anteil im erfindungsgemäß in der Deckschicht ausgebildeten Polyurethan beträgt daher vorzugsweise nicht mehr als 10 Gew.-%, insbesondere nicht mehr als 5 Gew.-%. Ganz besonders bevorzugt ist es, wenn diese Menge unter 2 Gew.-% oder sogar unter 1 Gew.-% liegt.

Von großer Bedeutung für die Gebrauchseigenschaften des erfindungsgemäßen Verbundgebildes sind folgende Größen: Erfindungsgemäß weist die Polyurethan-Deckschicht eine Stärke von 0,05 bis 1 mm auf, bevorzugt ist eine Stärke von etwa 0,1 bis 0,7 mm, wobei der Bereich 0,1 bis 0,4 mm besonders bevorzugt ist. Ist eine geschäumte Zwischenschicht vorgesehen, insbesondere auf der Basis eines Polyurethans, unabhängig davon, ob es der Formel (I) folgt oder nicht, weist diese vorzugsweise eine Stärke von etwa 0,1 bis 1 mm, insbesondere von etwa 0,3 bis 0,7 mm, auf. Bei der Zwischenschicht kann es sich um eine geschäumte Zwischenschicht handeln, insbesondere auf der Basis geschäumten Polyurethans beliebigen Aufbaus oder in Übereinstimmung mit dem Aufbau des Polyurethans gemäß der erfindungsgemäßen Polyurethan-Deckschicht.

Kern der vorliegenden Erfindung ist, wie oben gezeigt, die besondere Ausbildung der genarbten Deckschicht, die als Polyurethan-Deckschicht vorliegt. Damit wird dem Verbundgebilde der vorteilhafte Eindruck von Leder verliehen. Zur Erhöhung der thermischen Beständigkeit des Verbundgebildes kann z.B. eine Stabilisierung durch Einbeziehung phenolischer Antioxidantien erfolgen. Der Einsatz von HALS (Hindered Aminic Light Stabilizers) führt zu einer verbesserten Beständigkeit gegenüber der Einwirkung von UV-Strahlen. Als weitere Additive können Pigmente, Füllstoffe, Flammenschutzhilfsmittel, Verlaufhilfsmittel, Entlüftungshilfsmittel, Rheologiehilfsmittel, Stabilisatoren gegen oxidativen, hydrolytischen, strahlungsinduzierten oder mikrobiellen Abbau oder Alterung, Trennmittel, Verstärkungsstoffe oder Flammenschutzmittel sowie Treibmittel für geschäumte Zwischenschichten dienen.

Die genarbte Polyurethan-Deckschicht ist im erfindungsgemäßen Verbundgebilde mit einer Lackschicht versehen. Diese hat die Aufgabe, die Oberflächeneigenschaften zu verbessern, insbesondere die Abriebfestigkeit. Zudem ist es hiermit möglich, die optischen Eigenschaften wünschenswert zu steuern, so beispielsweise den Glanz. Die Lackschicht wird nach dem nachfolgend geschilderten erfindungsgemäßen Verfahren in fachbekannter Weise auf die Oberfläche der genarbten Polyurethan-Deckschicht aufgetragen.

Ein weiterer Gegenstand der Erfindung ist also ein Verfahren zur Herstellung der erfindungsgemäßen Verbundgebilde. Dieses Verfahren ist dadurch gekennzeichnet, dass a) eine oder mehrere Polyurethanschichten auf ein dehäsiv ausgerüstetes Trägerband aufgebracht werden, wobei eine Polyurethan-Deckschicht dadurch ausgebildet wird, indem eine zur Bildung eines Polyurethans fähige reaktive Streichmasse, die (i) ein bifunktionelles Polyol der Formel $HO-(CH_2)_m-R^1-(CH_2)_m-OH$, (ii) ein Diisocyanat der Formel $OCN-R^2-NCO$, wobei $R^1$ und $R^2$, unabhängig voneinander, und m die vorstehend definierte Bedeutung haben, (iii) einen verzögert reaktiven Katalysator, der erst bei einer Temperatur von mehr als etwa 100°C die Polyurethan-Bildungsreaktion insbesondere schnell katalysiert, auf das dehäsiv ausgerüstete Trägerband, das ein Negativ der gewünschten Deckschicht aufweist, aufgestrichen und bei einer Temperatur von mehr als etwa 100°C thermisch ausgehärtet wird, b) eine Trägerschicht, insbesondere eine textile Trägerschicht, auf der dem dehäsiv ausgerüsteten Trägerband entgegengesetzten Seite aufgebracht c) das Verbundgebilde, gegebenenfalls nach Aushärten einer einbezogenen Klebstoffschicht, vom dehäsiv ausgerüsteten Trägerband abgezogen wird und d) auf der genarbten Deckschicht eine Lackschicht ausgebildet wird, wobei die genarbte Polyurethan-Deckschicht eine mittlere Stärke von 0,05 bis 1 mm aufweist.

Das erfindungsgemäße Verfahren wird vorzugsweise im Sinne einer Umkehrbeschichtung durchgeführt, d.h. diejenige Schicht, die im Endprodukt als Oberfläche dienen soll, wird zuerst auf das Trägerband aufgebracht. Hierbei handelt es sich im Sinne der Erfindung um die genarbte Polyurethan-Deckschicht, auf der später noch beispielsweise eine Lackschicht aufgebracht werden kann. Das Trägerband ist derart ausgerüstet, dass vorzugsweise bereits das Negativ der später für die Narbung der Polyurethan-Deckschicht gewünschten Prägung vorliegt.

Bei einer besonders bevorzugten Ausgestaltung des erfindungsgemäßen Verfahrens werden auf dem Trägerband zwei Polyurethanschichten in gesonderten Schritten ausgebildet, wobei die äußere Polyurethanschicht die erfindungsgemäß ausgebildete genarbte Polyurethan-Deckschicht ist und die weitere Polyurethanschicht eine Innenschicht bzw. Zwischenschicht darstellt. Dabei kann, wenn gewünscht, die innere Polyurethanschicht anhand der reaktiven Streichmasse, die zur Ausbildung der Polyurethan-Deckschicht herangezogen wird, verwendet werden.

Die bezeichnete Streichmasse kann vielfältige vorteilhafte Ausgestaltungen erfahren: Ihre Viskosität liegt erfindungsgemäß im Bereich von 1 Pa.s bis 120 Pa.s, insbesondere von 5 Pa.s bis 15 Pa.s. Die mittlere Scherbeanspruchung kann über die Gleichung (1) abgeschätzt werden.

$$SR=\frac{V_p}{d} \qquad (1)$$

worin bedeuten: SR = Scherrate [$s^{-1}$], $V_p$ = Produktionsgeschwindigkeit [m/s], d = Rakelspalt [m]. Danach ergibt sich für eine Produktionsgeschwindigkeit von $V_p$ = 0,17 m/s (entspricht 10 m/min) bei einem Rakelspalt von d 0 4 x $10^{-4}$ m die Scherrate zu SR = 425 $s^{-1}$. Basierend auf dieser Abschätzung ist es günstig, wenn die Streichmasse bei einer Scherbeanspruchung im Bereich von 200 $s^{-1}$ < SR < 600 $s^{-1}$ niedrigviskos und damit besser fließfähig wird. Es ist daher bevorzugt, dass die Streichmasse ein strukturviskoses Verhalten zeigt. Für die Aufbereitung der Streichmasse und die nachfolgende Verarbeitung der Paste muss eine ausreichend große offene Zeit (Topfzeit) des Systems gewährleistet sein. Diese definiert sich als der Zeitraum, innerhalb dessen die Viskosität der Streichmasse in einem für die nachfolgende Bearbeitung akzeptablen Bereich liegt, für das erfindungsgemäße Verfahren im Bereich von 1 Pa.s bis 120 Pa.s. Als produktionssicher wird vorzugsweise eine offene Zeit von mehr als 6 Stunden, insbesondere mehr als 8 Stunden, angesehen.

Ein wesentlicher Parameter für eine wirtschaftliche Herstellung des erfindungsgemäßen Verbundgebildes ist die Produktionsgeschwindigkeit. Diese hängt wesentlich von der benötigten Verweilzeit bei der thermischen Aushärtung der Beschichtung ab. Vorzugsweise erfolgt die thermische Aushärtung über einen Zeitraum von 0,1 bis 4 Minuten bei 100 bis 180°C. Besonders bevorzugt ist ein Zeitraum von 60 bis 150 Sekunden bei 140 bis 180°C, insbesondere bei 145 bis 160°C. Dieser Zeitraum entspricht der zeitlichen Wirksamkeit des angesprochenen Katalysators und dient auch dem Verständnis der Anforderung an den verzögert reaktiven Katalysator, erst bei einer Temperatur von mehr als etwa 100°C die Polyurethan-Bildungsreaktion möglichst schnell zu katalysieren.

Im Gegensatz zu den gut thermisch prägbaren PVC-Laminaten sind Polyurethane aufgrund ihres elastomeren Charakters nur aufwendig prägbar. Eine feinstrukturierte Narbe wird daher erfindungsgemäß insbesondere durch Umkehrbeschichtung auf negativ genarbten Trägerbändern hergestellt. Daher weist der bei dem erfindungsgemäßen Verfahren verwendete dehäsiv ausgerüstete Träger ein Negativ einer gewünschten Prägung auf. Bei Anwendung der Transferbeschichtungen können vernetzende Polyurethanrohstoffe eingesetzt werden, so dass Verbundgebilde mit hohen thermischen und mechanischen Stabilitäten erhalten werden.

Für den mit der Erfindung angestrebten technischen Erfolg bzw. zur wünschenswerten Lösung der zugrunde gelegten Aufgabe ist es relevant, dass ein verzögert reaktiver Katalysator eingesetzt wird, der erst bei einer Temperatur von mehr als 100°C die Polyurethanbildungsreaktion katalysiert. Dabei werden Metallkatalysatoren auf Basis von Zinn, Zink, Zirkonium, Blei und/oder Bismuth und reaktionsverzögernde Substanzen eingesetzt. Derartige verzögert wirkende Metallkatalysatoren sind im Stand der Technik bekannt, wozu z.B. auf US-A-6,140,381 verwiesen sei.

Unter den Metallkatalysatoren, die erfindungsgemäß mit besonderem Vorteil herangezogen werden, findet sich insbesondere der Katalysator der Formel $(R_1)_n$-$S_n$(S-$CH_2$-CO-$OR_2)_m$, in der bedeuten $R_1$ einen verzweigten oder unverzweigten Alkylrest mit 1 bis 10 Kohlenstoffatomen, insbesondere mit 1 bis 6 Kohlenstoffatomen, insbesondere in Form eines Methyl-, Ethyl-, Propyl-, n-Butyl oder eines n-Octyl-Rest, $R_2$ einen verzweigten oder unverzweigten Alkylrest mit 1 bis 10 Kohlenstoffatomen, insbesondere 1 bis 6 Kohlenstoffatome, wobei der 2-EthylhexylRest ganz besonders bevorzugt ist, n und m eine ganze Zahl von 1 bis 3 und m = 4 - n. Hierbei ist es bevorzugt, wenn der Index m bei der vorstehend bezeichneten Formel die Zahl 2 darstellt. In Einzelfällen ist es zweckmäßig unterschiedliche Katalysatoren im Gemisch heranzuziehen, die einzeln unter die oben bezeichnete Formel fallen.

Die Menge des in der Streichmasse eingesetzten Katalysators unterliegt keiner relevanten Beschränkung. Es wird bevorzugt, wenn der Katalysator, bezogen auf die Streichmasse, darin etwa 0,01 bis 2 Gew.-%, insbesondere etwa 0,05 bis 0,5 Gew.-% ausmacht. Im Sinne der Erfindung ist es wichtig, dass der Katalysator nur verzögert katalysiert. Dies wird dadurch erreicht werden, dass zusätzliche Substanzen einbezogen werden, die die Reaktionsfähigkeit des Katalysators verzögern und bei der Reaktionstemperatur von etwa 100°C und mehr verdampfen. Die Menge dieser reaktionsverzögernden Substanzen in der Streichmasse ist fachmännisch einstellbar. Hierbei handelt es sich insbesondere um 2-Ethylhexan oder Acetylaceton.

Darüber hinaus kann es von Vorteil sein, der Streichmasse Rheologiehilfsmittel beizugeben, insbesondere in Form von Polyacrylaten und/oder Polyamiden, um der Streichmasse ein strukturviskoses Verhalten zu verleihen.

Die erfindungsgemäßen Verbundgebilde zeigen zahlreiche Vorteile: sie eignen sich insbesondere zur Verwendung als Kunstleder oder Schaumfolie. Die große Variabilität der einsetzbaren Edukte führt dazu, dass die Eigenschaften des Produktes nach Art eines Baukastensystems in großem Umfang variiert und somit den verschiedenen Zielvorgaben optimal angepasst werden können. Ein weiterer Vorteil liegt im günstigeren Preis der Edukte im Vergleich zu den bisher eingesetzten (mit Blockierungsreagenzien derivatisierten) Edukten. Da der Einsatz des Katalysators ein Variieren der Reaktivität der eingesetzten Streichmassen erlaubt, führt die Möglichkeit zur flexibleren Gestaltung des Produktionsablaufs zu weiteren Kostenvorteilen. Der Verzicht auf die mit Blockierungsreagenzien derivatisierten Edukte verbessert

die Eigenschaften des erfindungsgemäßen Verbundgebildes, insbesondere hinsichtlich Geruch und Gehalt an flüchtigen organischen Chemikalien deutlich. Darüber hinaus zeigen die erfindungsgemäßen Verbundgebilde eine besonders vorteilhafte Flexibilität und schließen eine unerwünschte Sprödigkeit weitgehend aus.

Das erfindungsgemäße Verbundgebilde weist eine Flexibilität (gemessen nach DIN 53 351) von 1.000 bis 1.000.000 (Faltbeanspruchungen) auf.

Insbesondere treten bei der erfindungsgemäßen Verbundfolie eine vorteilhafte Licht-UV-Beständigkeit, Beständigkeit gegen Wärmeeinflüsse, eine gute Haftung, insbesondere an benachbarten Polyurethan- oder Lackschichten, in Erscheinung. Dabei lässt sich die Dicke der genarbten Polyurethan-Deckschicht sehr variabel innerhalb des Bereiches von etwa 50 bis 500 $\mu$m gestalten.

Ein besonderer Vorteil der Erfindung ist es, dass die herangezogene spezielle Polyurethanmasse eine sogenannte High Solid-Masse ist und somit definitionsgemäß weniger als 10%, insbesondere weniger als 2% flüchtige Lösungsmittel, enthält. Selbst dann, wenn keinerlei Lösungsmittel darin vorliegt, hat das allenfalls einen positiven Einfluss auf das erhaltene Erzeugnis. Insbesondere werden die Verarbeitungseigenschaften der Polyurethan-Streichmasse nicht negativ beeinflusst. Der besondere Wert der Erfindung tritt dann in Erscheinung, wenn man die VOC-Emissionen des Verbundgebildes nach der VDA 278 bestimmt. So liegen die gemessen Werte deutlich unter 100 ppm, während bei Verbundgebilden mit einer Oberschicht basierend auf in Lösungsmitteln gelösten Polyurethanen Werte deutlich über 100 ppm gemessen werden, wobei in der Regel auch gesundheitsgefährdende Stoffe detektiert werden. Besonders vorteilhaft tritt bei dem erfindungsgemäßen Verbundgebilde die Tatsache in Erscheinung, bedingt durch die Abwesenheit eines niedermolekularen Blockierungsreagenzes, dass praktisch keine flüchtigen organischen Chemikalien entweichen. Bei den im Stand der Technik beschriebenen Polyurethan-Beschichtungen, die auf den Einsatz von mit 2-Butanonoxim blockierten Diisocyanaten beruhen, bleiben stets Reste des Blockierungsmittels in der fertigen Polyurethanschicht mit der Folge zurück, dass ein unangenehmer Geruch auftritt. Aufgrund der toxikologischen Eigenschaften des 2-Butanonoxims bedeutet dies ein gesundheitliches Risiko.

Die oben dargestellten besonderen Eigenschaften des erfindungsgemäßen Verbundgebildes führen auch zu einer vorteilhaften Verwendung als Kunstleder oder als Schaumfolie.

Insgesamt erweist es sich, dass die Erfindung die komplexe Aufgabe, von der sie ausgeht, vollumfänglich erfüllt.

Die Erfindung soll nachfolgend anhand von Beispielen noch näher definiert werden:

**Beispiel 1 (Referenz)**

Zur Herstellung eines Verbundgebildes wurde eine zur Bildung eines Polyurethans fähige reaktive Streichmasse mit folgender Zusammensetzung herangezogen:

Streichmasse a)

| | |
|---|---|
| 1000 g | Poly(tetramethylenglykol); Molekulargewicht 2000 g/mol, OH-Zah1 56 |
| 984 g | Diisocyanat-Präpolymer auf Basis von HDI und einem Polyether; Molekulargewicht 1600 g/mol; Isocyanatgehalt 5,2 % |
| 20 g | Katalysator mit der Formel $(CH_3(CH_2)_7)_2$-Sn-(S-$CH_2$-CO-$OC_8H_{17})_2$ Reaktionsindex 1,22 |

Streichmasse b)

| | |
|---|---|
| 1000 g | Poly(propylenglykol); Molekulargewicht 2000 g/mol, OH-Zahl 56 |
| 984 g | Diisocyanat-Präpolymer auf Basis von HDI und einem Polyether; Molekulargewicht 1600 g/mol; Isocyanatgehalt 5,2 % |
| 20 g | Katalysator mit der Formel $(CH_3(CH_2)_7)_2$-Sn-(S- $CH_2$-CO-$OC_8H_{17})_2$ Reaktionsindex 1,22 |

Streichmasse c)

| | |
|---|---|
| 1000 g | Poly(tetramethylenglykol); Molekulargewicht 250 g/mol, OH-Zah1 452 |
| 3225 g | Diisocyanat-Präpolymer auf Basis von HDI und einem Polyether; Molekulargewicht 660 g/mol; Isocyanatgehalt 12,8 % |
| 20 g | Katalysator mit der Formel $(CH_3(CH_2)_7)_2$-Sn-(S-$CH_2$-CO-$OC_8H_{17})_2$ Reaktionsindex 1,22 |

Streichmasse d) (Veraleichsbeispiel 1)

| | |
|---|---|
| 700 g | Poly(tetramethylenglykol); Molekulargewicht 250 g/mol, OH-Zahl 452 |
| 245 g | trifunktionelles Polyetherpolyol, Molekulargewicht 303 g/mol, OH-Zahl 555 |
| 3225 g | Diisocyanat-Präpolymer auf Basis von HDI und einem Polyether; Molekulargewicht 660 g/mol; Isocyanatgehalt 12,8 % |
| 20 g | Katalysator mit der Formel $(CH_3(CH_2)_7)_2$-Sn-(S- $CH_2$-CO-$OC_8H_{17})_2$ Reaktionsindex 1,22 |

Unmittelbar nach dem Abmischen wurde die reaktive Streichmasse mit Hilfe einer Walzenrakel-Streichmaschine mit einer definierten Dicke von 250 µm auf einen dehäsiv ausgerüsteten Träger aufgebracht und der aufgetragene Film bei 155°C 60 Sekunden in einem Heißluftofen getrocknet. Auf diesen ausgehärteten Film wurde dann eine Klebstoffschicht aufgebracht und mit Hilfe eines Kaschierwerks ein Textilträger in die noch feuchte Klebstoffschicht einkaschiert. Nach Trocknen des Klebers wurde das so beschichtete Textil vom dehäsiv ausgerüsteten Träger getrennt.

**Vergleichsbeispiel 2**

Zum Vergleich wurde ein Verbundgebilde auf Basis kommerziell erhältlicher blockierter Butanonoxim-blockierten Polyurethan High Solid-Systeme hergestellt. Die reaktive Streichmasse ist wie folgt zusammengesetzt:

500 g Impranil HS-62® (2-Butanonoxim-blockiertes Präpolymer, Fa. Bayer)
500 g Impranil HS-80® (2-Butanonoxim-blockiertes Präpolymer, Fa. Bayer)
71 g Imprafix HSC® (cycloaliphatisches Diamin, Fa. Bayer)
10g Levacast Fluid® SN (Verarbeitungshilfsmittel, Fa. Bayer)

Diese reaktive Streichmasse wurde ebenfalls zu einem Verbundgebilde verarbeitet. Die Verarbeitung erfolgte wie in Beispiel 1, mit der Ausnahme, dass das Aushärten der reaktiven Streichmasse 2 Minuten lang bei 150°C erfolgte.

Tabelle 1: Eigenschaften der reaktiven Streichmassen

| Eigenschaft | Beispiel 1a | Beispiel 1b | Beispiel 1c | Vergleichsbeispiel 2 |
|---|---|---|---|---|
| Vernetzer | Aliphatisches Diisocyanat-Präpolymer | | | Cycloaliphatisches Diamin |
| Mögliche Verarbeitungszeit ("Topfzeit") | 6-10h | 24 h | 6-10h | 24 h |
| Lösungsmittelgehalt | 0 % | 0 % | 0 % | 10 % |
| Variabilitäten der Rohstoffe | Einsatz vieler anderer reaktiver Polyole und Polyisocyanat-Präpolymere möglich | | | Nur eingeschränkte Rohstoffauswahl an blockierten Präpolymeren |
| Toxizitäten | - | - | - | Masse enthält toxisches Diamin und carcinogen verdächtiges 2-Butanonoxim |

Tabelle 2: Produktionseigenschaften

| Eigenschaft | Beispiel 1a | Beispiel 1b | Beispiel 1c | Vergleichsbeispiel 2 |
|---|---|---|---|---|
| Vernetzungszeit bei 155°C | 60 sec | > 10 min | 60 sec | 120 sec |
| Beschleunigung der Reaktion und der Produktionsgeschwindigkeit | a) durch Temperaturerhöhung | b) durch Einsatz anderer | a) durch Temperaturerhöhung | Deblockierungsreaktion ist geschwindigkeitsbestimmend, daher nur bedingt möglich |
| | b) durch Erhöhung der , Katalysatormenge | Katalysatoren die die Topfzeit deutlich verkürzen | b) durch Erhöhung der Katalysatormenge | |
| Produktionstemperaturen | 100-240°C | - | 100-240°C | 145-175°C |
| Kritische Emissionen während der Produktion | keine | keine | keine | Lösungsmittel und 2-Butanonoxim |

Tabelle 3: Weitere Produkteigenschaften

| Eigenschaft | Beispiel 1a, 1c | Vergleichsbeispiel 2 |
|---|---|---|
| Emissionen nach VDA 278 | VOC < 50 ppm | VOC > 200 ppm, vor allem 2-Butanonoxim und Lösungsmittel |
| Mechanische Eigenschaften | Für die drei Systeme nahezu gleich | |
| Flexibilität | Alle drei Systeme bilden flexible Filme | |
| Abriebeigenschaften | Für die drei Systeme nahezu gleich | |

Tabelle 4: Vergleich der Flexibilität

| Eigenschaft | Beispiel 1c | Vergleichsbeispiel 1 | Vergleichsbeispiel 2 |
|---|---|---|---|
| Dauerfaltverhalten nach DIN 53351 | | | |
| 100.000 | Note 0 | Note 5 | Note 5 |
| Faltbeanspruchungen Benotung nach DIN 16922 | keine Veränderung | Beschichtung völlig durchbrochen | Beschichtung völlig durchbrochen |
| 500.000 | Note 0 | | |
| Faltbeanspruchungen Benotung nach DIN 16922 | Keine Veränderung | | |

Die Materialien der Vergleichsbeispiele 1 und 2 sind so spröde, dass die Folie schon nach geringer Flexibilitätsbeanspruchung Risse aufweist.

## Patentansprüche

1. Verbundgebilde mit einer oder mehreren Polyurethanschichten, einer Trägerschicht, insbesondere einer textilen Trägerschicht oder einer Trägerschicht aus PVC, Polyolefin oder einem Polyurethanschaum, einer genarbten Deckschicht sowie einer gegebenenfalls zwischen diesen Schichten angeordneten Klebstoffschicht, **dadurch gekennzeichnet, dass** die genarbte Deckschicht ein Polyurethan der Formel (I)

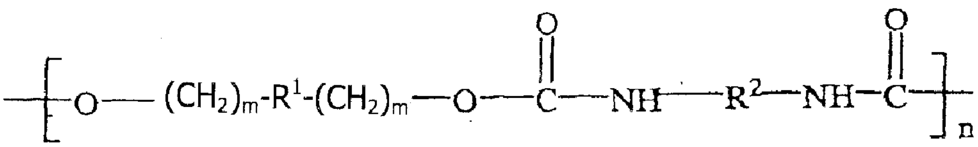

(I)

enthält, worin bedeuten:
$-O-(CH_2)_m-R^1-(CH_2)_m-O-$ den Rest eines bifunktionellen Polyols mit endständiger primärer Hydroxyfunktionalität, $R^1$ und $R^2$, unabhängig voneinander, einen organischen aliphatischen, cycloaliphatischen und/oder heterocyclischen Rest, n eine ganze Zahl von 1 bis 50.000 und m eine ganze Zahl von mindestens 2, seine Flexibilität (gemessen nach DIN 53 351) 1.000 bis 1.000.000 (Faltbeanspruchungen) beträgt, auf der genarbten Deckschicht eine Lackschicht angeordnet ist, und die genarbte Polyurethan-Deckschicht eine mittlere Stärke von 0,05 bis 1 mm aufweist.

2. Verbundgebilde nach Anspruch 1, **dadurch gekennzeichnet, dass** m eine ganze Zahl von 2 bis 6, insbesondere von 4 bis 6 und/oder n eine ganze Zahl von 10 bis 20.000, insbesondere von 25 bis 5.000 bedeutet.

3. Verbundgebilde nach mindestens einem der Ansprüche 1 oder 2, **dadurch gekennzeichnet, dass** das bifunktionelle Polyol ein Molekulargewicht von 90 bis 12.000, insbesondere von 250 bis 2.000, aufweist.

4. Verbundgebilde nach mindestens einem der Ansprüche 1 bis 3, **dadurch gekennzeichnet, dass** das bifunktionelle Polyol ein Polyetherglykol, ein Polyesterglykol, ein Polythioetherpolyol, ein Polycarbonatpolyol, ein hydroxylgruppenhaltiges aliphatisches Polyacetat und/oder ein hydroxygruppenhaltiges aliphatisches Polycarbonat ist.

5. Verbundgebilde nach mindestens einem der Ansprüche 1 bis 4, **dadurch gekennzeichnet, dass** der Rest $R^2$ der Formel (I) auf Isophorondiisocyanat, Hexamethylendiisocyanat, Dicyclohexylmethan-4,4'-diisocyanat, Hexandiisocyanat und/oder Bis(isocyanatomethyl)-cyclohexan zurückgeht.

6. Verbundgebilde nach mindestens einem der Ansprüche 1 bis 5, **dadurch gekennzeichnet, dass** die genarbte Polyurethan-Deckschicht eine mittlere Stärke von 0,1 bis 0,7 mm aufweist.

7. Verbundgebilde nach Anspruch 6, **dadurch gekennzeichnet, dass** die Polyurethan-Deckschicht eine mittlere Stärke von 0,15 bis 0,4 mm aufweist.

8. Verbundgebilde nach mindestens einem der Ansprüche 1 bis 7, **dadurch gekennzeichnet, dass** es eine geschäumte Zwischenschicht aufweist, insbesondere aus geschäumtem Polyurethan.

9. Verbundgebilde nach Anspruch 8, **dadurch gekennzeichnet, dass** die geschäumte Zwischenschicht eine Stärke von etwa 0,1 bis 1 mm, insbesondere von 0,3 bis 0,7 mm, aufweist.

10. Verfahren zur Herstellung eines Verbundgebildes nach mindestens einem der Ansprüche 1 bis 9, **dadurch gekennzeichnet, dass**

   a) eine oder mehrere Polyurethanschichten auf ein Trägerband aufgebracht werden, wobei eine genarbte Polyurethan-Deckschicht dadurch ausgebildet wird, indem eine zur Bildung eines Polyurethans fähige reaktive Streichmasse, die

      (i) ein bifunktionelles Polyol der Formel $HO-(CH_2)_m-R^1-(CH_2)_m-OH$,
      (ii) ein Diisocyanat der Formel $OCN-R^2-NCO$, wobei $R^1$ und $R^2$, unabhängig voneinander, und m die in den vorstehenden Ansprüchen definierte Bedeutung haben,
      (iii) einen verzögert reaktiven Katalysator, der erst bei einer Temperatur von mehr als etwa 100°C die Polyurethan-Bildungsreaktion katalysiert, enthält,
      wobei in der Streichmasse Metallkatalysatoren auf Basis von Zinn, Zink, Zirkonium, Blei und/oder Bismuth und reaktionsverzögernde Substanzen, die die Reaktionsfähigkeit des Katalysators vermindern und bei der Reaktionstemperatur von etwa 100°C und mehr verdampfen, eingesetzt werden und die Streichmasse auf eine Viskosität von 1 Pa.s bis 120 Pa.s eingestellt wird,
      die Streichmasse auf das dehäsiv ausgerüstete Trägerband, das ein Negativ der gewünschten Deckschicht aufweist, aufgestrichen und bei einer Temperatur von mehr als etwa 100°C thermisch ausgehärtet wird,

   b) eine Trägerschicht, insbesondere eine textile Trägerschicht, auf der dem dehäsiv ausgerüsteten Trägerband entgegengesetzten Seite aufgebracht wird,
   c) das Verbundgebilde vom dehäsiv ausgerüsteten Trägerband abgezogen wird und
   d) auf der genarbten Deckschicht eine Lackschicht ausgebildet wird, wobei die genarbte Polyurethan-Deckschicht eine mittlere Stärke von 0,05 bis 1 mm aufweist.

11. Verfahren nach Anspruch 10, **dadurch gekennzeichnet, dass** eine weitere Polyurethanschicht auf die der Polyurethan-Deckschicht entgegengesetzte Seite, gegebenenfalls unter Einbeziehung von Zwischenschichten, insbesondere in Form einer Klebstoffschicht, aufgebracht wird, insbesondere unter Verwendung der gleichen Streichmasse.

12. Verfahren nach Anspruch 10 oder 11, **dadurch gekennzeichnet, dass** ein Metallkatalysator der Formel (III)

$$(R_1)_n\text{-}Sn(S\text{-}CH_2\text{-}CO\text{-}OR_2)_m \qquad \text{(III)}$$

eingesetzt wird, worin bedeuten:
$R_1$ einen verzweigten oder unverzweigten Alkylrest mit 1 bis 10 Kohlenstoffatomen, insbesondere einen Methyl-, n-Butyl oder n-Octyl-Rest, $R_2$ einen verzweigten oder unverzweigten Alkylrest mit 1 bis 10 Kohlenstoffatomen, insbesondere den 2-Ethylhexyl-Rest, n und m eine ganze Zahl von 1 bis 3 und m = 4-n, oder ein Katalysatorgemisch hiervon.

13. Verfahren nach Anspruch 12, **dadurch gekennzeichnet, dass** m die Zahl 2 darstellt.

**14.** Verfahren nach mindestens einem der Ansprüche 10 bis 13, **dadurch gekennzeichnet, dass** die Streichmasse 0,01 bis 2 Gew.-%, insbesondere 0,05 bis 0,5 Gew.-%, verzögert reaktiven Katalysator enthält.

**15.** Verfahren nach mindestens einem der Ansprüche 10 bis 14, **dadurch gekennzeichnet, dass** als reaktionsverzögernde Substanzen 2-Ethylhexansäure und/oder Acetylaceton eingesetzt werden.

**16.** Verfahren nach mindestens einem der Ansprüche 10 bis 15, **dadurch gekennzeichnet, dass** die Streichmasse auf eine Viskosität von 1 Pa.s bis 15 Pa.s, insbesondere von 5 Pa.s bis 15 Pa.s, eingestellt wird. (aus vormaligem Anspruch 14)

**17.** Verfahren nach mindestens einem der Ansprüche 10 bis 16, **dadurch gekennzeichnet, dass** die offene Zeit (Topfzeit) der Streichmasse mit geeignet ausgewählten Katalysatoren sowie gegebenenfalls mit reaktionsverzögernden Substanzen auf eine Zeit von mehr als 6 Stunden eingestellt wird.

**18.** Verfahren nach mindestens einem der Ansprüche 10 bis 17, **dadurch gekennzeichnet, dass** der Streichmasse durch Einbeziehen von Rheologiehilfsmitteln, insbesondere in Form von Polyacrylaten und/oder Polyamiden, ein strukturviskoses Verhalten gegeben wird.

**19.** Verfahren nach mindestens einem der Ansprüche 10 bis 18, **dadurch gekennzeichnet, dass** das thermische Aushärten während 0,1 bis 4 min bei 100 bis 180°C durchgeführt wird.

**20.** Verfahren nach Anspruch 19, **dadurch gekennzeichnet, dass** das thermische Aushärten während 60 bis 150 Sekunden bei 140 bis 180°C, insbesondere bei 145 bis 160°C durchgeführt wird.

**21.** Verwendung des Verbundgebildes nach mindestens einem der Ansprüche 1 bis 9 als Kunstleder oder als Schaumfolie.

## Claims

**1.** Composite structure having one or more polyurethane layers, a support layer, in particular a textile support layer or a support layer of PVC, polyolefin or a polyurethane foam, a grained covering layer and also an adhesive layer optionally disposed between these layers, **characterized in that** the grained covering layer comprises a polyurethane of formula (I)

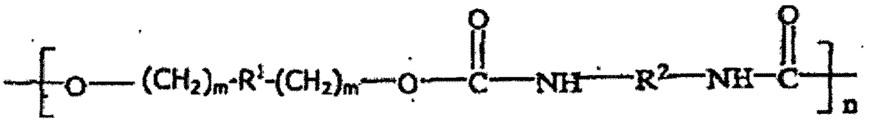

(I)

where
-O-(CH2)m-R1-(CH2)m-O- denotes the radical derived from a bifunctional polyol having terminal primary hydroxyl functionality, R1 and R2 each independently denote an organic aliphatic, cycloaliphatic and/or heterocyclic moiety, n denotes an integer from 1 to 50 000 and m denotes an integer of at least 2, its flexibility (as measured to DIN 53351) is in the range from 1000 to 1 000 000 (flexing cycles),a layer of varnish is provided on the grained covering layer and the grained polyurethane covering layer has an average thickness of 0.05 to 1 mm.

**2.** Composite structure according to Claim 1, **characterized in that** m denotes an integer from 2 to 6, in particular from 4 to 6, and/or n denotes an integer from 10 to 20 000, in particular from 25 to 5000.

**3.** Composite structure according to either or both of Claims 1 and 2, **characterized in that** the bifunctional polyol has a molecular weight of 90 to 12 000, in particular of 250 to 2000.

**4.** Composite structure according to at least one of Claims 1 to 3, **characterized in that** the bifunctional polyol is a polyether glycol, a polyester glycol, a polythioether polyol, a polycarbonate polyol, a hydroxyl-containing aliphatic polyacetate and/or a hydroxyl-containing aliphatic polycarbonate.

**5.** Composite structure according to at least one of Claims 1 to 4, **characterized in that** the R2 moiety of formula (I)

is derived from isophorone diisocyanate, hexamethylene diisocyanate, dicyclohexylmethane 4,4'-diisocyanate, hexane diisocyanate and/or bis(isocyanatomethyl)cyclohexane.

**6.** Composite structure according to at least one of Claims 1 to 5, **characterized in that** the grained polyurethane covering layer has an average thickness from 0.1 to 0.7 mm.

**7.** Composite structure according to Claim 6, **characterized in that** the average thickness of the polyurethane covering layer is in the range from 0.15 to 0.4 mm.

**8.** Composite structure according to at least one of Claims 1 to 7, **characterized in that** it includes a foamed interlayer, in particular a foamed polyurethane interlayer.

**9.** Composite structure according to Claim 8, **characterized in that** the foamed interlayer is about 0.1 to 1 mm, in particular from 0.3 to 0.7 mm, in thickness.

**10.** Process for producing a composite structure according to at least one of Claims 1 to 9, **characterized in that**

a. one or more polyurethane layers are applied atop a support belt, wherein a grained polyurethane covering layer is formed as a result of a reactive spreadable material capable of forming a polyurethane comprising

i. a bifunctional polyol of the formula HO-(CH2)m-$R^1$-(CH2)m-OH,
ii. a diisocyanate of the formula OCN-$R^2$-NCO, wherein $R^1$ and $R^2$ each independently and m are as defined in the preceding claims,
iii. a delayed-reactive catalyst which only starts to catalyse the polyurethane formation reaction at a temperature of more than about 100°C,
wherein the spreadable material incorporates metal catalysts based on tin, zinc, zirconium, lead and/or bismuth and reaction-delaying substances which reduce the reactivity of the catalyst and evaporate at the reaction temperature of about 100°C or more, and the spreadable material is adjusted to a viscosity in the range from
Pa.s to 120 Pa.s,
the spreadable material is spread atop the dehesively endowed support belt, which evinces a negative of the desired covering layer, and is thermally cured at a temperature of more than about 100°C,

b. a support layer, in particular a textile support layer, is applied atop the side opposite the dehesively endowed support belt,
c. the composite structure is peeled off from the dehesively endowed support belt, and
d. a layer of varnish is provided atop the grained covering layer, wherein the grained polyurethane covering layer has an average thickness of 0.05 to 1 mm.

**11.** Process according to Claim 10, **characterized in that** a further layer of polyurethane is applied atop the side opposite the polyurethane covering layer, optionally by including interlayers, in particular in the form of an adhesive layer, more particularly by using the same spreadable material.

**12.** Process according to Claim 10 or 11, **characterized in that** it utilizes a metal catalyst of formula (III)

$$(R_1)_n\text{-Sn}(\text{S-CH}_2\text{-CO-OR}_2)_m \qquad \text{(III)}$$

where $R_1$ denotes a branched or unbranched alkyl moiety of 1 to 10 carbon atoms, in particular a methyl, n-butyl or n-octyl moiety, $R_2$ denotes a branched or unbranched alkyl moiety of 1 to 10 carbon atoms, in particular the 2-ethylhexyl moiety, n and m are each an integer from 1 to 3 subject to the proviso that m = 4-n, or a catalyst mixture thereof.

**13.** Process according to Claim 12, **characterized in that** m is 2.

**14.** Process according to at least one of Claims 10 to 13, **characterized in that** the spreadable material comprises from 0.01 to 2 wt%, in particular from 0.05 to 0.5 wt%, of delayed-reactive catalyst.

**15.** Process according to at least one of Claims 10 to 14, **characterized in that** 2-ethylhexanoic acid and/or acetylacetone

are employed as reaction-delaying substances.

16. Process according to at least one of Claims 10 to 15, **characterized in that** the spreadable material is adjusted to a viscosity in the range from 1 Pa.s to 15 Pa.s, in particular from 5 Pa.s to 15 Pa.s.

17. Process according to at least one of Claims 10 to 16, **characterized in that** the open time (pot life) of the spreadable material is adjusted to a time of more than 6 hours with suitably selected catalysts and optionally also, with reaction delaying substances.

18. Process according to at least one of Claims 10 to 17, **characterized in that** pseudoplastic behaviour is bestowed on the spreadable material by inclusion therein of rheology modifiers, in particular in the form of polyacrylates and/or polyamides.

19. Process according to at least one of Claims 10 to 18, **characterized in that** the thermal curing is effected at 100 to 180°C for from 0.1 to 4 min.

20. Process according to Claim 19, **characterized in that** the thermal curing is effected at 140 to 180°C, in particular at 145 to 160°C, for from 60 to 150 seconds.

21. Use of the composite structure according to at least one of Claims 1 to 9 as artificial leather or as foam sheeting.

## Revendications

1. Structure composite comprenant une ou plusieurs couches de polyuréthane, une couche support, notamment une couche support textile ou une couche support en PVC, en polyoléfine ou en une mousse de polyuréthane, une couche supérieure chagrinée, ainsi qu'une couche adhésive éventuellement agencée entre ces couches, **caractérisée en ce que** la couche supérieure chagrinée contient un polyuréthane de formule (I)

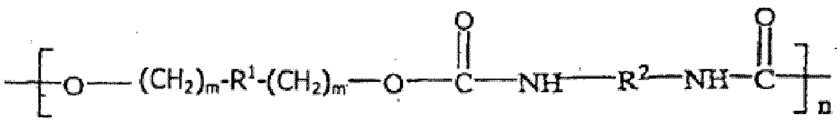

(I)

dans laquelle :
$-O-(CH_2)_m-R^1-(CH_2)_m-O-$ signifie le radical d'un polyol bifonctionel à fonctionnalité hydroxy primaire terminale, $R^1$ et $R^2$ signifient, indépendamment l'un de l'autre, un radical organique aliphatique, cycloaliphatique et/ou hétérocyclique, n signifie un nombre entier de 1 à 50 000 et m un nombre entier d'au moins 2, sa flexibilité (mesurée selon DIN 53 351) est de 1 000 à 1 000 000 (sollicitations par pliage), une couche de vernis est agencée sur la couche supérieure chagrinée, et la couche supérieure en polyuréthane chagrinée présente une épaisseur moyenne de 0,05 à 1 mm.

2. Structure composite selon la revendication 1, **caractérisée en ce que** m est un nombre entier de 2 à 6, notamment de 4 à 6, et/ou n est un nombre entier de 10 à 20 000, notamment de 25 à 5 000.

3. Structure composite selon au moins l'une quelconque des revendications 1 ou 2, **caractérisée en ce que** le polyol bifonctionnel présente un poids moléculaire de 90 à 12 000, notamment de 250 à 2 000.

4. Structure composite selon au moins l'une quelconque des revendications 1 à 3, **caractérisée en ce que** le polyol bifonctionnel est un polyéther-glycol, un polyester-glycol, un polythioéther-polyol, un polycarbonate-polyol, un polyacétate aliphatique contenant des groupes hydroxyle et/ou un polycarbonate aliphatique contenant des groupes hydroxyle.

5. Structure composite selon au moins l'une quelconque des revendications 1 à 4, **caractérisée en ce que** le radical $R^2$ de la formule (I) est issu de diisocyanate d'isophorone, de diisocyanate d'hexaméthylène, de 4,4'-diisocyanate de dicyclohexylméthane, de diisocyanate d'hexane et/ou de bis(isocyanatométhyl)-cyclohexane.

6. Structure composite selon au moins l'une quelconque des revendications 1 à 5, **caractérisée en ce que** la couche

supérieure en polyuréthane chagrinée présente une épaisseur moyenne de 0,1 à 0,7 mm.

**7.** Structure composite selon la revendication 6, **caractérisée en ce que** la couche supérieure en polyuréthane présente une épaisseur moyenne de 0,15 à 0,4 mm.

**8.** Structure composite selon au moins l'une quelconque des revendications 1 à 7, **caractérisée en ce qu'**elle comprend une couche intermédiaire moussée, notamment en polyuréthane moussé.

**9.** Structure composite selon la revendication 8, **caractérisée en ce que** la couche intermédiaire moussée présente une épaisseur d'environ 0,1 à 1 mm, notamment de 0,3 à 0,7 mm.

**10.** Procédé de fabrication d'une structure composite selon au moins l'une quelconque des revendications 1 à 9, **caractérisé en ce que**

a) une ou plusieurs couches en polyuréthane sont appliquées sur une bande support, une couche supérieure en polyuréthane chagrinée étant formée par application d'une sauce de couchage réactive apte à la formation d'un polyuréthane, contenant

(i) un polyol bifonctionnel de formule $HO-(CH_2)_m-R^1-(CH_2)_m-OH$,
(ii) un diisocyanate de formule $OCN-R^2-NCO$, $R^1$ et $R^2$, indépendamment l'un de l'autre, et m ayant la signification indiquée dans les revendications précédentes
(iii) un catalyseur réactif retardé, qui ne catalyse la réaction de formation d'un polyuréthane qu'à partir d'une température supérieure à environ 100 °C,
des catalyseurs métalliques à base d'étain, de zinc, de zirconium, de plomb et/ou de bismuth et des substances retardant la réaction, qui diminuent la réactivité du catalyseur et qui s'évaporent à la température de réaction d'environ 100 °C et plus, étant utilisés dans la sauce de couchage et la sauce de couchage étant ajustée à une viscosité de 1 Pa.s à 120 Pa.s,
la sauce de couchage étant étalée sur la bande support rendue déhésive, qui présente un négatif de la couche supérieure souhaitée, et étant durci thermiquement à une température de plus d'environ 100 °C,

b) une couche support, notamment une couche support textile, est appliquée sur le côté opposé de la bande support rendue déhésive,
c) la structure composite est ôtée de la bande support rendue déhésive,
d) une couche de vernis est formée sur la couche supérieure chagrinée, dans lequel la couche supérieure en polyuréthane chagrinée présente une épaisseur moyenne de 0,05 à 1 mm.

**11.** Procédé selon la revendication 10, **caractérisé en ce qu'**une couche de polyuréthane supplémentaire est appliquée sur le côté opposé de la couche supérieure en polyuréthane, éventuellement avec inclusion de couches intermédiaires, notamment sous la forme d'une couche adhésive, notamment en utilisant la même sauce de couchage.

**12.** Procédé selon la revendication 10 ou 11, **caractérisé en ce qu'**un catalyseur métallique de formule (III)

$$(R_1)_n\text{-Sn}(S\text{-}CH_2\text{-}CO\text{-}OR_2)_m \qquad \text{(III)}$$

est utilisé, dans laquelle
$R_1$ signifie un radical alkyle ramifié ou non ramifié de 1 à 10 atomes de carbone, notamment un radical méthyle, n-butyle ou n-octyle, $R_2$ signifie un radical alkyle ramifié ou non ramifié de 1 à 10 atomes de carbone, notamment le radical 2-éthylhexyle, n et m signifient un nombre entier de 1 à 3 et m = 4-n, ou un mélange de tels catalyseurs.

**13.** Procédé selon la revendication 12, **caractérisé en ce que** m représente le nombre 2.

**14.** Procédé selon au moins l'une quelconque des revendications 10 à 13, **caractérisé en ce que** la sauce de couchage contient 0,01 à 2 % en poids, notamment 0,05 à 0,5 % en poids, de catalyseur réactif retardé.

**15.** Procédé selon au moins l'une quelconque des revendications 10 à 14, **caractérisé en ce que** de l'acide 2-éthylhexanoïque et/ou de l'acétylacétone sont utilisés en tant que substances retardant la réaction.

**16.** Procédé selon au moins l'une quelconque des revendications 10 à 15, **caractérisé en ce que** la sauce de couchage

est ajustée à une viscosité de 1 Pa.s à 15 Pa.s, notamment de 5 Pa.s à 15 Pa.s (selon la revendication 14 précédente).

**17.** Procédé selon au moins l'une quelconque des revendications 10 à 16, **caractérisé en ce que** la durée ouverte (durée de vie en pot) de la sauce de couchage contenant des catalyseurs choisis de manière appropriée et éventuellement des substances retardant la réaction est ajustée à une durée de plus de 6 heures.

**18.** Procédé selon au moins l'une quelconque des revendications 10 à 17, **caractérisé en ce qu'**un comportement pseudo-plastique est donné à la sauce de couchage par l'incorporation d'adjuvants de rhéologie, notamment sous la forme de polyacrylates et/ou de polyamides.

**19.** Procédé selon au moins l'une quelconque des revendications 10 à 18, **caractérisé en ce que** le durcissement thermique est réalisé pendant 0,1 à 4 minutes à 100 à 180 °C.

**20.** Procédé selon la revendication 19, **caractérisé en ce que** le durcissement thermique est réalisé pendant 60 à 150 secondes à 140 à 180 °C, notamment 145 à 160 °C.

**21.** Utilisation de la structure composite selon au moins l'une quelconque des revendications 1 à 9 en tant que cuir artificiel ou feuille de mousse.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 2208995 A
- DE 2330175 A
- GB 1144176 A
- US 4102719 A
- DE 4422871 A
- EP 1059379 B1
- US 6140381 A